(19) Europäisches Patentamt
European Patent Office
Office européen des brevets

(11) **EP 1 043 283 B1**

(12) **EUROPEAN PATENT SPECIFICATION**

(45) Date of publication and mention
of the grant of the patent:
**09.02.2011 Bulletin 2011/06**

(51) Int Cl.:
*C03C 25/10* (2006.01)     *C03C 25/12* (2006.01)
*C03C 25/18* (2006.01)

(21) Application number: **98947953.0**

(22) Date of filing: **20.10.1998**

(86) International application number:
**PCT/JP1998/004738**

(87) International publication number:
**WO 1999/032415 (01.07.1999 Gazette 1999/26)**

(54) **METHOD AND APPARATUS FOR COATING OPTICAL FIBER**

VERFAHREN UND VORRICHTUNG ZUR BESCHICHTUNG EINER OPTISCHEN FASER

PROCEDE ET APPAREIL POUR L'APPLICATION D'UN REVETEMENT SUR UNE FIBRE OPTIQUE

(84) Designated Contracting States:
**DE FR GB IT SE**

(30) Priority: **22.12.1997 JP 35315097**

(43) Date of publication of application:
**11.10.2000 Bulletin 2000/41**

(73) Proprietor: **Sumitomo Electric Industries, Ltd.**
**Osaka-shi,**
**Osaka 541-0041 (JP)**

(72) Inventors:
• **OISHI, Kazumasa,**
**Yokohama Works of Sumitomo Elec.**
**Yokohama-shi,**
**Kanagawa 244-8588 (JP)**
• **OKUNO, Kaoru,**
**Yokohama Works of Sumitomo Elec.**
**Yokohama-shi,**
**Kanagawa 244-8588 (JP)**
• **TSUCHIYA, Ichiro,**
**Yokohama Works of Sumitomo Elec.**
**Yokohama-shi,**
**Kanagawa 244-8588 (JP)**

• **TAKAGI, Masahiro,**
**Yokohama Works of Sumitomo Elec.**
**Yokohama-shi,**
**Kanagawa 244-8588 (JP)**

(74) Representative: **HOFFMANN EITLE**
**Patent- und Rechtsanwälte**
**Arabellastraße 4**
**81925 München (DE)**

(56) References cited:
**JP-A- 9 241 042     JP-A- 9 241 042**
**JP-A- 9 255 372     JP-A- 9 255 372**
**US-A- 4 801 186**

• **M. SATO ET AL.: "Double layer silicone coating with double cone nozzle in-line with optical fiber drawing" PROCEEDINGS OF THE FIFTH EUROPEAN CONFERENCE ON OPTICAL COMMUNICATION, AMSTERDAM, 1979, pages 5.6-1-5.6-4, XP008096785**

EP 1 043 283 B1

## Description

### Technical Field

The present invention relates to an optical fiber coating method and coating apparatus; and, in particular, to those adapted to stably apply a coating resin in a higher linear velocity region.

### Background Art

In the making of optical fibers, there has conventionally been employed a method comprising the steps of drawing an optical fiber by pulling an optical fiber preform while heating and melting it; applying two different types of resins to the surface thereof by use of a die adapted to apply two layers at the same time; curing the resins by use of a curing apparatus; and taking up the optical fiber with a take-up apparatus by way of a capstan, a pulley, and the like. An apparatus which applies two different types of resins by use of a die adapted to apply two layers at the same time is disclosed in Japanese Utility Model JP 203 8437 U, Japanese Patent JP 9086971, , or the like.

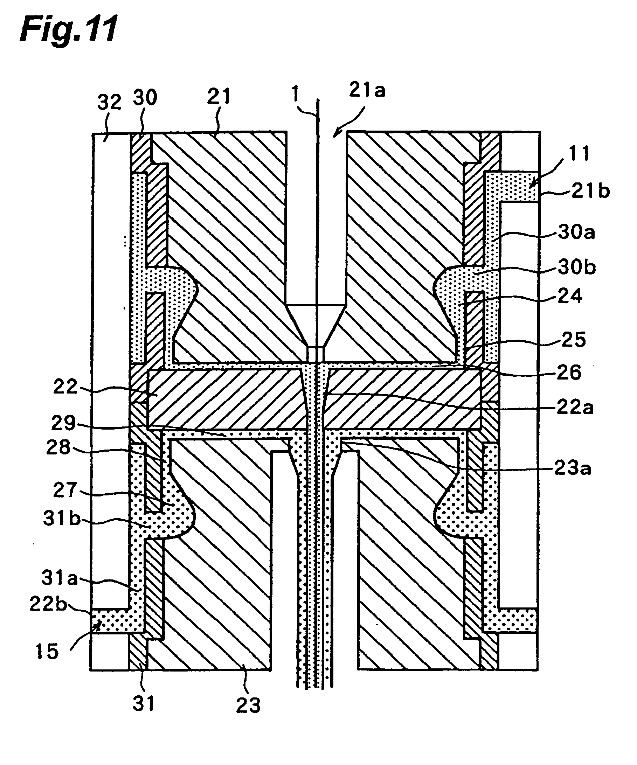

Fig. 11 is a sectional view of the conventional optical fiber coating apparatus disclosed in Japanese Patent JP 9086971. An optical fiber 1 comes into contact with a first coating resin 11 when passed through a die hole 22a of a first coating die 22 from a nipple hole 21a. The optical fiber 1 covered with the first coating resin 11 further comes into contact with a second coating resin 15 when passed through a die hole 23a of a second coating die 23 from the die hole 22a, and then is drawn out of the die hole 23a, whereby the optical fiber 1 with a double coating is fabricated.

From a first coating resin introduction hole 21b provided in the upper part of an outer sleeve 32, the first coating resin 11 is successively supplied to an outer peripheral groove 30a of an inner upper sleeve 30, a hole thereof, a first reservoir 24 disposed at the outer periphery of the nipple 21, a first draw portion 25, a first coating resin orthogonal flow path 26 formed by the tip surface of the nipple 21 and the upper face of the first coating die 22, and a portion between the outlet of the nipple hole 21a and the inlet of the die hole 22a. From a second coating resin introduction hole 22b provided in the lower part of the outer sleeve 32, the second coating resin 15 is successively supplied to an outer peripheral groove 31a of an inner lower sleeve 31, a hole thereof, a second reservoir 27 disposed at the outer periphery of the second coating die 23, a second draw portion 28, a second coating resin orthogonal flow path 29 formed by the lower face of the first coating die 22 and the upper face of the second coating die 23, and a portion between the outlet of the die hole 22a and the inlet of the die hole 23a.

It is described that the first coating resin 11 is thus once stored in the first reservoir 24 and then is sufficiently narrowed by the first draw portion 25, thereby being regulated so as to form a uniform flow throughout the periphery, by which the optical fiber 1 is provided with a coating having a uniform thickness. On the other hand, the first coating resin orthogonal path 26 is formed between the outlet end face of the nipple hole 21a and the inlet end face of the die hole 22a and intersects the optical fiber 1 at right angles. It is also described that the first coating resin 11 consequently flows orthogonal to the optical fiber 1, and thus can stably be applied to the latter while suppressing the recirculation thereof.

However, such a conventional coating apparatus has a drawback in that the outside diameter of the coating fluctuates as the drawing speed increases.

The Proceedings of the Fifth European Conference on Optical Communications, Amsterdam, 1979 (pages 5.6-1 to 5.6-4) discloses double-layer silicone coating with double cone nozzle in-line with optical fiber drawing.

US 4 801 186 A discloses a coated optical fiber having a thermoplastic rubber composition disposed around its circumference.

JP 09 241 042 A and JP 09 255 372 A also disclose coated optical fibers useful for understanding the background to the present invention.

### Summary of the Invention

It is an object of the present invention to provide an optical fiber coating method and coating apparatus which, when the optical fiber is covered with a resin applied thereto, can improve the applicability of the resin to the optical fiber, and by which the coating resin can stably be applied to the optical fiber without outside diameter fluctuation, in particular, in a higher linear velocity region of the optical fiber.

According to a first aspect of the present invention, there is provided an optical fiber coating method comprising the steps of applying a first coating resin to the outer periphery of an optical fiber by injecting a first coating resin into a clearance between a first die hole and said optical fiber, while inserting said optical fiber through said first die hole provided in a first coating die and having an inside diameter greater than an outside diameter of said optical fiber; and applying a second coating resin onto said first coating resin by injecting a second coating resin into a clearance between a second die hole and the surface of said first coating resin applied to said optical fiber, while inserting said optical fiber through said second die hole provided in said second coating die and having an inside diameter greater than that of said first die hole, wherein a disk-shaped upper end face of said second coating die and a lower end face of said first coating die are opposed to each other so as to arrange said first and second die holes concentrically, and said second coating resin is injected into said second die hole by way of a gap formed between the lower end face of said first coating die and the upper end face of said second coating die; characterized in that the lower end face of said first coating die is basically disk shaped and has a protrusion formed around said first die hole and projecting in the passing direction of said optical fiber so as to reduce an annular lower-pressure region formed around said optical fiber in a flow of said second coating resin within said gap.

According to a second aspect of the present invention, there is provided an optical fiber coating apparatus for applying first and second coating resins as a laminate to the outer periphery of an optical fiber, said apparatus comprising of a first coating die having a first die hole through which said optical fiber is inserted and a second coating die having a second die hole which is concentric with said first die hole and through which said optical fiber passed through said first die hole is inserted; wherein said first coating die has a lower end face, and wherein said first die hole and the outer periphery of said optical fiber therein forming a space therebetween into which said first coating resin is injected; and said second coating die has an upper end face comprising a circular plate opposing the lower end face of said first coating die so as to form a gap through which said second coating resin is injected into a space formed between said second die hole and the outer periphery of said optical fiber therein; characterized in that the lower end face of the first coating die is basically disk shaped and has a protrusion projecting in the passing direction of said optical fiber formed around said first die hole.

According to the present invention, the first coating resin is applied to the outer periphery of the optical fiber through the first die hole of the first coating die. Also, the second coating resin is supplied from the surroundings of the gap formed by the first and second coating dies into the second die hole at the center part, so as to be applied onto the first coating resin. Here, since the first die hole outlet is formed to have a protrusion which is shaped so as to project toward the exit, i.e., toward the second die hole, and reduce an annular lower-pressure region within the second coating resin which flows as mentioned above, the flow of second coating resin is regulated so as to align with the flowing direction of the optical fiber. As a consequence, the inserted optical fiber is restrained from vibrating, whereby the first and second coating resins can uniformly be applied to the optical fiber at the first and second die holes, respectively. Also, since the tip of the protrusion approaches the inlet of the second die hole, it is effective in the prevention of vibration.

As a result of the below-described studies, the inventors have found it preferable for the protrusion to be shaped like a circular truncated cone and, in particular, to satisfy the following relationships:

$$0.05 \text{ mm} < H < 0.25 \text{ mm}$$

$$0.10 \text{ mm} < W < 0.30 \text{ mm}$$

$$0.05 \text{ mm} \leq L < 0.1 \text{ mm}$$

$$0.8 \text{ mm} \leq G \leq 1.2 \text{ mm}$$

especially

$$0.05 \, G < H < 0.5 \, G$$

$$(D_2 - D_1)/2 < W < G$$

$$0.01 \text{ mm} \leq L < W$$

where H is the height of the circular truncated cone of the protrusion, W is the distance between the outer periphery of the bottom portion of the circular truncated cone and the inner peripheral face of the first die hole, L is the distance between the outer periphery of the head portion of the circular truncated cone and the inner peripheral face of the first die hole, $D_1$ is the inner peripheral face diameter of the first die hole on the outlet side of the optical fiber, $D_2$ is the inner peripheral face diameter of the second die hole on the inlet side of the optical fiber, and G is the distance of the gap between the first and second coating dies.

**Brief Description of the Drawings**

In order to better understand the claimed invention, and to show how the same may be carried into effect, reference will now be made, by way of example only, to the accompanying drawings, in which:

Figs. 1 to 4 are views showing results of CFD simulations concerning coating outside diameter fluctuations of coating apparatus, in which Fig. 1 shows a pressure distribution of a coating resin concerning a conventional coating apparatus, Fig. 2 shows a stream line vector distribution thereof, Fig. 3 shows a pressure distribution of a coating resin concerning an embodiment of a coating apparatus according to the present invention, and Fig. 4 shows a stream line vector distribution thereof;

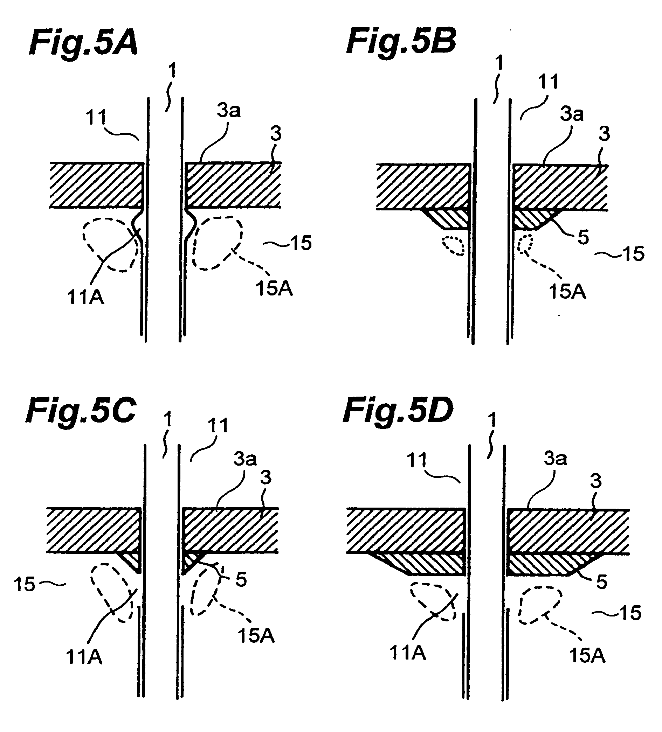

Figs. 5A to 5D are schematic views showing respective influences of forms of the protrusion disposed near the outlet of the first die hole;

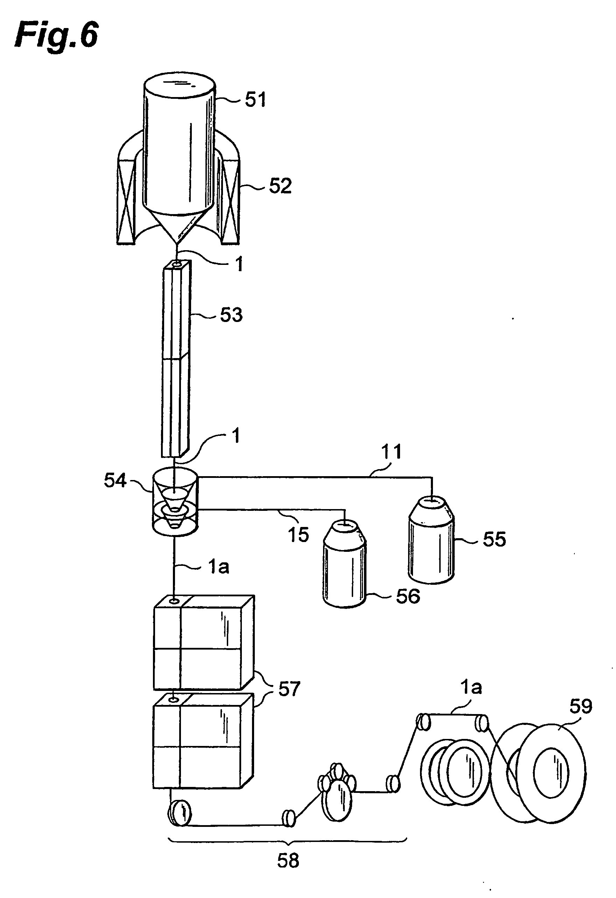

Fig. 6 is an overall configurational view of a coated optical fiber manufacturing line including an embodiment of a coating apparatus in accordance with the present invention;

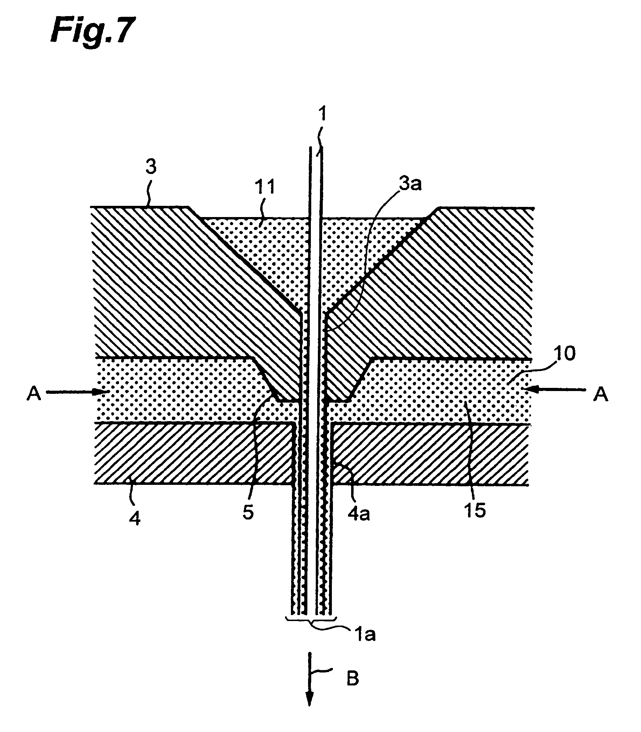

Fig. 7 is a sectional view showing a basic configuration of an embodiment of a coating apparatus in accordance with the present invention;

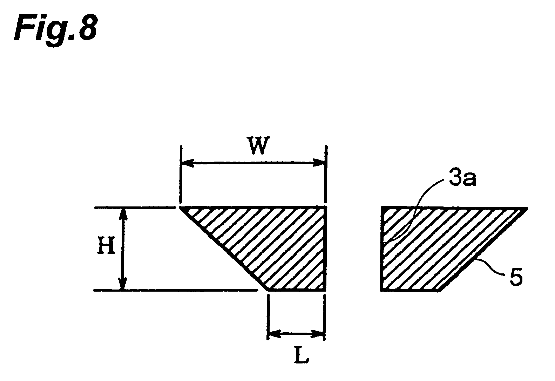

Fig. 8 is a sectional view showing the structure of the protrusion in the basic configuration of Fig. 7;

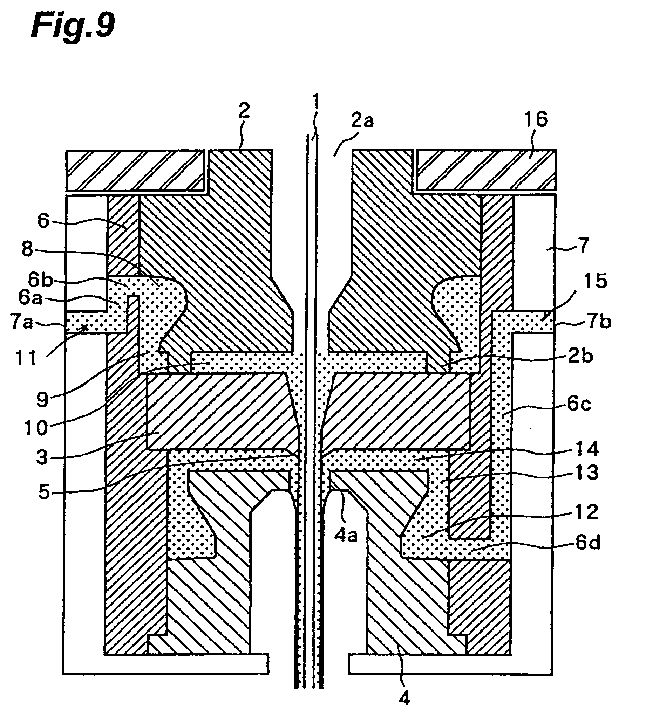

Fig. 9 is a sectional view showing a configuration of an embodiment of the coating apparatus in accordance with the present invention;

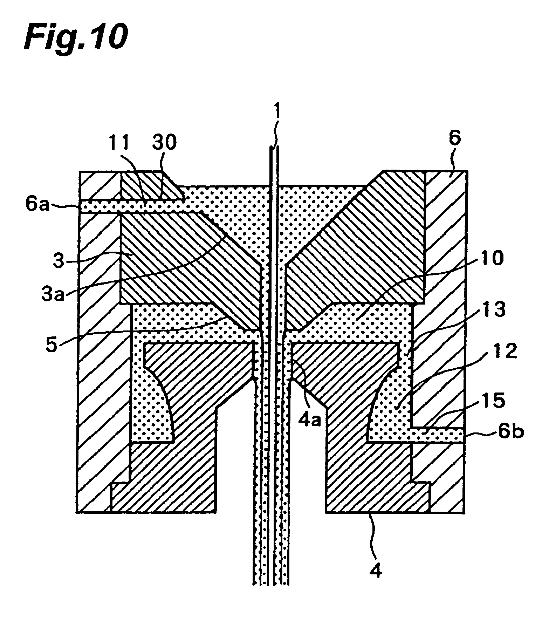

Fig. 10 is a sectional view showing configuration of other embodiment of the coating apparatus in accordance with the present invention; and
Fig. 11 is a sectional view showing a configuration of the conventional coating apparatus.

**Detailed Description**

The inventors studied causes of the outside diameter fluctuation in the conventional optical fiber coating apparatus described above with reference to Fig 11 in detail by simulations and experiments. As a result, it has been found that, if the outlet portion of the die hole 22a at the lower face of the first coating die 3 is flat, then an unstable annular lower-pressure region is formed near this outlet, whereby the first coating resin 11 applied to the outer periphery of the optical fiber 1 is pulled by the annular lower-pressure region, so as to irregularly expand to the outside, thus forming the outside diameter fluctuation in the coating.
For eliminating the outside diameter fluctuation of the coating, the inventors have found it effective to provide a protrusion for regulating flows near the outlet. The present invention is based on this finding.
Here, the results of CFD (Computational Fluid Dynamics) simulations will be explained in brief.
Flow analysis program CFX 4.1 (Flow Solver) manufactured by AEA Technology PLC was used for the simulations, and influences of the form of the outlet portion were mainly studied. The analysis condition is shown in the following Table.

| | |
|---|---|
| Taper angle of 1st layer die | 3 degrees |
| 1st layer die hole diameter | 0.25 mm |
| Distance between 1st and 2nd layer dies | 1.0 mm (parallel part) |
| 2nd layer die hole diameter | 0.38 mm |
| Resin viscosity | 1000 = mPa·s (cps) in both 1st and 2nd layers |
| Resin feed pressure | = 24.5 MPa (2.5 kg/mm$^2$) in both 1st and 2nd layers |
| Fiber linear viscosity | 1000 m/min |

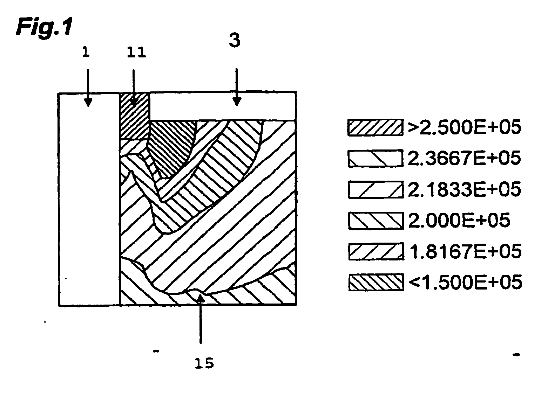

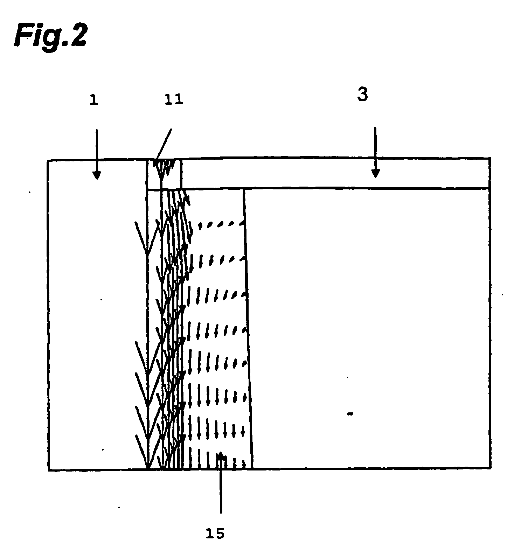

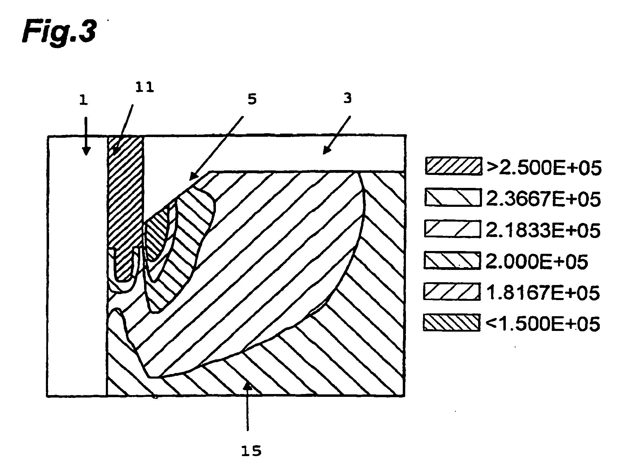

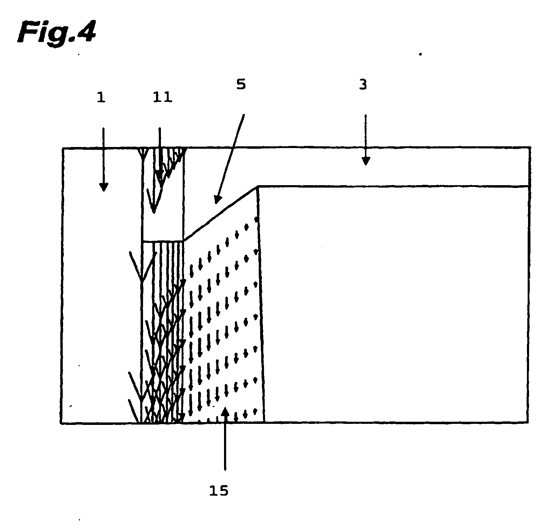

Under this analysis condition, two kinds of cases, i.e., case 1 in which the first layer die hole outlet is flat (corresponding to the conventional coating apparatus) and case 2 in which the first layer die hole outlet is provided with a beak-shaped protrusion having a height of 0.1 mm and a skirt width of 0.1mm (corresponding to the coating apparatus of the present invention), were analyzed. Figs. 1 and 3 show the respective pressure distributions near the first layer die hole outlet of the two cases, whereas Figs. 2 and 4 show the respective stream line vector distributions near the first layer die hole of the two cases.

In case 1 corresponding to the conventional coating apparatus, as shown in Fig. 1, it can be seen that an annular lower-pressure region widely spreads near the first layer die hole outlet. Consequently, the resin coming out of the first layer die hole is outwardly pulled in the vicinity of the outlet as shown in Fig. 2. As a result, a bulge occurs in the outside diameter of the coating.

In case 2 corresponding to the coating apparatus of the present invention, on the other hand, as shown in Fig. 3, it can be seen that the annular lower-pressure region becomes smaller. Consequently, resin flows substantially align in parallel with the optical fiber drawing direction as shown in Fig. 4, whereby the outside diameter of the coating becomes more stable than that in case 1.

The inventors also studied influences of the form of the protrusion provided near the outlet by CFD simulations. Figs. 5A to 5D show their results, and are views schematically showing lower-pressure regions generated near the outlet of the first die hole 3a and their resulting outside diameter fluctuations. In the case shown in Fig. 5A provided with no protruded member, a lower-pressure region 15A of second coating resin 15 near the optical fiber 1 spreads over a wide area, whereby a bulge 11A of first coating resin 11 becomes remarkable. In the case with a protrusion shaped like a circular truncated cone as shown in Fig. 5B, on the other hand, it has been found that the lower-pressure region 15A near the optical fiber 1 is suppressed, so as to substantially eliminate the bulge 11A of first coating resin 11. It has also been found that, in the case where the protruded member is substantially conical or shaped like a flat circular truncated cone with a large head or bottom portion as shown in Fig. 5C or 5D, the effect on reducing the dimensions of the lower-pressure region 15A tends to be smaller.

Also, the inventors compared these CFD simulation results with experimental results, and have confirmed the effect on suppressing the outside diameter fluctuation obtained when the protrusion is shaped like a circular truncated cone with a small head portion.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter.

In the following, embodiments of the present invention will be explained in detail with reference to the accompanying drawings. To facilitate the comprehension of the explanation, the same reference numerals denote the same parts, where possible, throughout the drawings, and a repeated explanation will, be omitted. Dimensions in the drawings include those exaggerated for the sake of explanation, so that ratios of dimensions of each constituent do not always coincide with those in practice.

Before explaining the coating method and apparatus in accordance with the present invention, the method of making a coated optical fiber and its manufacturing line as a whole will be explained in brief with reference to Fig. 6.

While a preform 51 is heated by a drawing furnace 52 so as to be softened, a tensile force is applied thereto, so that the preform 51 is thinly drawn and processed into a thin linear optical fiber 1. Thus processed optical fiber 1 is guided into a forced cooling apparatus 53, in which it is cooled and hardened. This optical fiber 1 is guided into a coating apparatus 54, in which first and second coating resins 11, 15 supplied from coating resin tanks 55, 56 are applied as a double layer to the outer periphery of the optical fiber 1, whereby a coated optical fiber 1a is produced. The coated optical fiber 1a is guided into a UV-irradiation type curing apparatus 57, in which the applied coating resin is irradiated with ultraviolet rays so as to be cured. The coated optical fiber 1a having cured coating is fed to a take-up apparatus 59 with a capstan driving section 58, so as to be taken up by a prepared roll.

The coating method and coating apparatus in accordance with the present invention relate to the coating apparatus 54 for applying the coating resins. Fig. 7 is a sectional view showing a basic configuration of the coating apparatus in accordance with the present invention. In this apparatus, the first coating resin 11 and the second coating resin 15 are applied as a laminate to the outer periphery of the optical fiber 1, so as to produce the double-coated optical fiber 1a.

This apparatus comprises a first coating die 3 having a first die hole 3a through which the optical fiber 1 is inserted, and a second coating die 4 having a second die hole 4a disposed concentric with the first die hole 3a and downstream therefrom in the passing direction of the optical fiber 1. The inside diameter of the first die hole 3a is set greater than the outside diameter of the optical fiber 1, and the inside diameter of the second die hole 4a is set greater than the first die hole 3a. On the outlet side of the optical fiber 1, the first die hole 3a is provided with a protrusion 5 projecting toward the second die hole 4a, whereas a clearance 10 for injecting the second coating resin 15 into the second die hole 4a is formed between the first coating die 3 and the second coating die 4. The first die hole 3a is constituted by a taper portion and a cylindrical land portion, formed continuously therewith, having a smaller inside diameter.

Operations of this apparatus, i.e., basic operations of the coating method in accordance with the present invention, will now be explained.

The optical fiber 1 is drawn in the direction of arrow B through the apparatus. Namely, the optical fiber 1 is initially inserted through the first die hole 3a. Here, the first coating resin 11, which is adjusted by heating or the like to yield a low viscosity (e.g., 1000 mPa·s (cps) ), has been injected into the space between the inner periphery of the first die hole 3a and the outer periphery of the optical fiber 1. Due to the friction with the outer peripheral face of the optical fiber 1 passing through the first die hole 3a at a high speed, the first coating resin 11 is pulled by the optical fiber 1, so as to raise the pressure within the resin, by which the resin is applied to the outer peripheral face of the optical fiber 1 substantially uniformly.

The optical fiber 1 thus having its outer peripheral face coated with the first coating resin 11 passes through the outlet of the first die hole 3a located at the tip of the protrusion 5, thereby being inserted into the second die hole 4a. Here, the second coating resin 15 has been injected into the space between the inner periphery of the second die hole 4a and the surface of the first coating resin 11 applied onto the optical fiber 1 through the clearance 10 in the direction of arrow A. It is preferred that the second coating resin 15 be adjusted by heating or the like to have a low viscosity (e.g., 1000 mPa·s (cps)). It is because of the fact that, if the viscosity of the first coating resin 11 and that of the second coating resin 15 differ greatly from each other, then flows are likely to be disordered at the interface between the first coating resin 11 and the second coating resin 15, whereby there is a possibility of the interface between both coated resins being disordered. Due to the friction with the outer surface of the first coating resin 11 applied onto the outer peripheral face of the optical fiber 1 passing through the second die hole 4a at a high speed, the second coating resin 15 supplied to the second die hole 4a is pulled by the first coating resin 11, so as to raise the pressure within the second coating resin 15, by which the second coating resin 15 is applied to the outer surface of the first coating resin 11 substantially uniformly. Since the outlet of the first die hole 3a is provided with the protrusion 5, the flow of second coating resin 15 within the clearance 10 is regulated as mentioned above, whereby annular lower-pressure regions are restrained from occurring in the area surrounding the optical fiber 1. As a result, fluctuations are restrained from occurring in the interface between the first coating resin 11 and second coating resin 15 applied to the optical fiber 1 immediately after the latter comes out of the first die hole 3a, whereby the outside diameter fluctuation of the applied first coating resin 11 can be suppressed.

Using the apparatus shown in Fig. 7, the inventors carried out experiments for confirming the flow-regulating effects upon the second coating resin obtained by the protrusion 5, results of which will be explained in the following.

Fig. 8 is a lateral sectional view showing the protrusion 5 in the apparatus of Fig. 7. In the following, let H be the height of the circular truncated cone of the protrusion 5, W be the distance between the inner face of the first die hole 3a at the center of the circular truncated cone and the outer periphery of the bottom portion (on the first coating die 3 side) of the circular truncated cone, L be the distance between the inner face of the first die hole 3a and the outer periphery of the head portion (on the second coating die 4 side) of the circular truncated cone, and G be the distance of the clearance 10 formed between the lower end face of the first coating die 3 and the upper end face of the second coating die 4.

First and second coating resins, which were urethane acrylate type UV-curable resins, were applied as a laminate to the outer periphery of a silica type optical fiber 1 having an outside diameter of 125 mu m, so as to produce a coated optical fiber 1a having a first coating layer with an outside diameter of 200 mu m and a second coating layer with an outside diameter of 240 mu m. Each of the coated resins had yielded a viscosity of 3000 mPa·s (cps) at 25 DEG C, which was adjusted to 1000 mPa·s (cps) by heating at the time of coating. The diameter $D_1$ of the first die hole on the output side was set to 0.26 mm, whereas the diameter $D_2$ of the second die hole on the input side was set to 0.37 mm. The following table summarizes the results of experiments in which the outside diameter stability of the coated optical fiber 1a was studied while varying the dimensions of the protrusion 5 and the drawing speed of the optical fiber 1 in Comparative Examples.

| | Dimensions of protrusion (mm) | | | | Stability of coating outside diameter | | | |
|---|---|---|---|---|---|---|---|---|
| | | | | | Linear velocity(m/min) | | | |
| | H | W | L | G | 500 | 800 | 1000 | 1200 |
| Example | 0.2 | 0.25 | 0.1 | 1 | ○ | ○ | ○ | ○ |
| Comp. Ex. 1 | - | - | - | 1 | ○ | × | × | × |
| Comp. Ex. 2 | 0.2 | 0.25 | 0 | 1 | ○ | △ | × | × |

(continued)

| | Dimensions of protrusion (mm) | | | | Stability of coating outside diameter | | | |
|---|---|---|---|---|---|---|---|---|
| | | | | | Linear velocity(m/min) | | | |
| | H | W | L | G | 500 | 800 | 1000 | 1200 |
| Comp. Ex. 3 | 0.2 | 1.5 | 0.1 | 1 | ○ | Δ | × | × |

○: The longitudinal outside diameter fluctuation is $\pm 0.5$ $\mu$m or less.
Δ : The longitudinal outside diameter fluctuation is less than $\pm 1$ $\mu$m.
× : The longitudinal outside diameter fluctuation is $\pm 1$ $\mu$m or more.

In the case where no protrusion is provided (Comparative Example 1), while no longitudinal fluctuations of coating outside diameter occur at a linear velocity of 500 m/min or less, an outside diameter fluctuation of $\pm 1$ $\mu$m or more occurs when the linear velocity is higher. In the case provided with a protrusion shaped like a circular cone in which the distance L from the inner face of the hole to the outer periphery of the head portion of a circular truncated cone is set to zero (Comparative Example 2), the coating outside diameter fluctuation begins to occur when the linear velocity reaches 800 m/min, though the outside diameter fluctuation is smaller than that in Comparative Example 1. In the case where the protrusion is formed like a circular truncated cone with the small bottom portion, i.e., the length W on the first coating die 3 side is short (Example), the coating outside diameter fluctuation hardly appears when a linear velocity reaches 1200 m/min. However, it has been found that the coating outside diameter fluctuation occurs again when the bottom portion of the circular truncated cone is too large, i.e., the length W on the first coating die 3 side is too long (Comparative Example 3). Namely, it has also experimentally been confirmed the CFD simulation result as shown in Figs. 1 and 3 that providing a protrusion 5 shaped like a circular truncated cone at the outlet of the first die hole 3a is effective in regulating the flow of second coating resin and suppressing the coating outside diameter fluctuation.

Upon further detailed studies, it has been found that dimension ranges (mm) of the protrusion which can substantially suppress the outside diameter fluctuation are:

$$0.05 \leq H \leq 0.25$$

$$0.10 \leq W \leq 0.30$$

$$0.05 \leq L \leq 0.1$$

$$0.8 \leq G \leq 1.2$$

and further preferable ranges are:

$$0.05G < H < 0.5G$$

$$(D_2 - D_1)/2 < W < G$$

$$0.01 \leq L < W$$

Some preferred embodiments of the optical fiber coating apparatus in accordance with the present invention will now be explained in detail. They have a basic configuration identical to that of the apparatus shown in Fig. 7.

Fig. 9 is a sectional view showing a first embodiment of the optical fiber coating apparatus in accordance with the present invention. This coating apparatus is constituted by a nipple 2, a first coating die 3, and a second coating die 4 which are assembled together. To assemble these three members, inner sleeve 6 and outer sleeve 7 are used. While the optical fiber 1 exited from the nipple hole 2a passes through the first die hole 3a of the first coating die 3, the optical fiber 1 comes into contact with the first coating resin 11 filled in the first die hole 3a so that the first coating resin 11 is coated around the outer periphery of the optical fiber 1. The optical fiber 1 coated with the first coating resin 11 thus obtained comes into contact with the second coating resin 15 while passing through the second die hole 4a so that the second coating resin 15 is coated around the outer periphery of the coated optical fiber 1. Then, the optical fiber 1 drawn downward from the second coating die 4a has double coating.

The form of each member will now be explained. The nipple 2 has a thick, substantially cylindrical form provided with a nipple hole 2a on its center axis. An intermediate portion of the outer peripheral face of the nipple 2 is provided with a circumferential groove, which is deeper on the upper side and tapers downward, so as to form a first reservoir 8 within the flow path. The outside diameter of the nipple 2 is made slightly smaller than the inside diameter of the after-mentioned inner sleeve 6 at the position corresponding to the lower side of the first reservoir 8, whereby a first draw portion 9 is formed along the boundary with respect to the inner peripheral face of the inner sleeve 6. The lower end face of the nipple 2 is a circular plane orthogonal to the center axis of the nipple hole 2a and provided with three projections 2b, which form a clearance to become an after-mentioned first orthogonal passage 10 under this lower end face. The nipper hole 2a is constituted, successively from the upper part, a cylindrical portion having a larger inside diameter, a taper portion and a cylindrical portion having a small inside diameter with short length.

The first coating die 3 is a circular plate having planer upper and lower end faces and is provided with a first die hole 3a on its center axis orthogonal to each end faces. The clearance formed between the upper end face of the first coating die 3 and the lower end face of the nipple 2 becomes the orthogonal flow path 10, and is orthogonal to the axis of the optical fiber 1 inserted to this apparatus. The clearance formed between the lower end face of the first coating die 3 and the after-mentioned upper end face of the second coating die 4 becomes a second passage 14 and is orthogonal to the axis of the optical fiber 1 inserted to this apparatus, too. The lower end face of the first coating die 3 is provided with a protrusion 5 at the outlet portion of the first die hole 3a. The first die hole 3a is constituted, successively from the upper part, a taper portion and a land portion having a smaller inside diameter, whereas the inside diameter of the upper opening of the taper portion is set greater than the inside diameter of the opening at the lowermost portion of the nipple hole 2a.

The second coating die 4 is a thick substantially cylindrical body having a second die hole 4a at its center axis. Its upper end face is circular plane orthogonal to the axes of the first die hole 3a and the second die hole 4a. On the upper end side, the outside diameter of the second coating die 4 is made slightly smaller than the inside diameter of the after-mentioned inner sleeve 6, whereby a second draw portion 13 is formed along the boundary with respect to the inner peripheral face of the inner sleeve 6. Also, an intermediate portion of the second coating die 4 has a circumferential groove adjacent the lower side of the second draw portion 13, which is made shallower in the upper part and gradually becomes deeper downward, whereby a second reservoir 12 is formed. The lower face of the second coating die 4 is formed to have a radially extending disk-shaped flange.

The second die hole 4a is solely constituted by a land portion having a short section and a parallel inside diameter, whereas the lower end thereof is connected to a cylindrical opening having a larger inside diameter. The inside diameter of the second die hole 4a is greater than the inside diameter of the lower opening of the first die hole 3a. Since the second die hole 4a thus has no taper portion, the fluid pressure of the second coating resin 15 does not become excessively high in the hole, whereby the first coating resin 11 existing inside the second coating resin 15 would not be crushed. Also, the accuracy of processing can be improved in the land portion of the second die hole 4a, whereby the applicability of the second coating would not deteriorate in a higher linear velocity region of the optical fiber 1 either.

The inner sleeve 6 has a thin, substantially cylindrical form, whose inside diameter is changed according to axial positions, so as to form steps in the inner peripheral face thereof. Using these steps, the nipple 2, the first coating die 3, and the second coating die 4 are secured at predetermined positions within the inner sleeve 6.

The outer sleeve 7 has a thin, substantially cylindrical form, which has a first coating resin introduction port 7a and a second coating resin introduction port 7b near the top end, these holes are connected to the first reservoir 8 and the second reservoir 12, respectively after assembled.

The assembling of this coating apparatus will now be explained. First, the first coating die 3 is inserted into the inner sleeve 6 from thereabove, and positioned using the step formed middle portion thereof. Subsequently, the nipple 2 is inserted into the inner sleeve 6 from thereabove, and positioned above the first coating die. The clearance between the upper surface of the first coating die 3 and the lower surface of the nipple 2 is determined by the height of the protrusion 2b formed on the lower surface of the nipple 2. Next, the second coating die 4 is inserted into the inner sleeve 6 from there below, and positioned using the step formed lower portion thereof. Finally, assembly thus obtained is inserted into the outer sleeve 7 from thereabove, and the lid 16 is secured thereto from thereabove for fixing each parts therein.

In the apparatus thus assembled the passages introducing the first coating resin 11 and second coating resin 15 now will be explained, the first coating resin 11 is supplied under pressure from the first coating resin introduction port 7a to the first reservoir 8 of the nipple 2 by way of the outer peripheral groove 6a and hole 6b of the inner sleeve 6. The first coating resin 11 within the first reservoir 8 is further fed by way of the first draw portion 9 toward the axial center of the apparatus through the first passage 10, so as to reach a portion between the outlet of the nipple hole 2a and the inlet of the first die hole 3a.

On the other hand, the second coating resin 15 is supplied under pressure from the second coating resin introduction port 7b to the second reservoir 12 of the second coating die 4 by way of the outer peripheral groove 6c and hole 6d of the inner sleeve 6. The second coating resin 15 within the second reservoir 12 is fed by way of the second draw portion 13 toward the axial center of the apparatus through the second passage 14, so as to reach a portion between the outlet of the first die hole 3a and the inlet of the second die hole 4a.

The optical fiber 1 is inserted from the nipple hole 2a and passes through the filled first coating resin 11 while traveling through the first die hole 3a. Subsequently, while traveling through the second die hole 4a of the second coating die 4, the optical fiber 1 in the state coated with the first coating resin 11 passes through the filled second coating resin 15. Then, the optical fiber 1 in the state coated with the second coating resin 15 is drawn to the outside, whereby the outer periphery of the optical fiber 1 with a double coating is fabricated.

Here, since the first coating resin 11 is regulated by the first reservoir 8 and the first draw portion 9 so as to form a uniform flow throughout the periphery before being guided to the first passage 10, the first coating resin 11 within the first passage 10 flows orthogonal to the optical fiber 1. As a result, the optical fiber 1 can be provided with a uniform thickness of the first coating, and the first coating resin 11 can be restrained from recirculating.

Also, since the second coating resin 15 is regulated by the second reservoir 12 and the second draw portion 13 so as to form a uniform flow throughout the periphery before being guided to the second passage 14, the second coating resin 15 within the second passage 14 flows orthogonal to the optical fiber 1 whose outer peripheral face is coated with the first coating resin 11. Consequently, as in the case of the first coating resin 11, a uniform thickness of the second coating can be applied thereto.

Fig. 10 is a view showing a second embodiment of the coating apparatus in accordance with the present invention. This apparatus is constituted by a first coating die 3, a second coating die 4, and an inner sleeve 6 combining these dies together. This coating apparatus has a basic configuration identical to that of the apparatus shown in Fig. 7.

While passing through the first die hole 3a of the first coating die 3, the optical fiber 1 comes into contact with and is coated with the injected first coating resin 11. Subsequently, while passing through the second die hole 4a of the second coating die 4 after coming out of the first die hole 3a, the optical fiber 1 covered with the first coating resin 11 further comes into contact with and is coated with the second coating resin 15, whereby the optical fiber 1 downwardly drawn out of the second die hole 4a with a double coating is fabricated.

The form of each member will now be explained. The first coating die 3 has substantially a cylindrical form having a resin introduction hole 3b in its upper part, the first die hole 3a in the center part, and a flat lower end face orthogonal to the first die hole 3a. The clearance formed between this lower end face and the upper end face of the second coating die 4, which will be explained later, forms a second passage 14. Further, this lower end face is provided with a protrusion 5 at the outlet of the first die hole 3a. The first die hole 3a is constituted by, successively from the upper part, a taper portion and a parallel land portion having a smaller inside diameter.

The second coating die 4 has a thick, substantially cylindrical form provided with the second die hole 4a at the center. Its upper end face is formed as a circular flat surface orthogonal to the first die hole 3a and the second die hole 4a. Also, the outside diameter of the second coating die 4 on the upper end side thereof is made slightly smaller than the inside diameter of the positioning member 6, which will be explained later, whereby a draw portion 13 is formed along the boundary with respect to the inner peripheral face of the positioning member 6. Further, an intermediate portion of the second coating die 4 corresponding to the lower side of the draw portion 13 has a circumferential groove, which is made shallower on the upper side and gradually becomes deeper downward, so as to function as a reservoir 12.

The second die hole 4a has a parallel land portion alone having a short section, and is connected to a cylindrical opening having a greater inside diameter thereunder. The inside diameter of the land portion opening is greater than that of the opening on the lower side of the first die hole 3a. Since the second die hole 4a thus has no taper portion, the fluid pressure of the second coating resin 15 does not become excessively high in the hole, whereby the first coating resin 11 existing inside the second coating resin 15 would not be crushed. Also, the accuracy of processing can be improved in the parallel land of the second die hole 4a, whereby the applicability of the second coating would not deteriorate in a higher linear velocity region of the optical fiber 1 either.

The inner sleeve 6 is substantially shaped like a cylinder, having an inlet port 6a, disposed near the upper end portion, for introducing the first coating resin, and an inlet port 6b, disposed near the lower end portion, for introducing the second coating resin. For securing the first coating die 3 and the second coating die 4 to predetermined positions, the inside diameter of the inner sleeve 6 is changed according to axial positions, so as to form steps in the inner peripheral face thereof.

The method of assembling this apparatus will now be explained. First, the second coating die 3 is fitted into the inner sleeve 6 from therebelow, and is positioned with the steps provided in their respective bottom portions. Subsequently, the first coating die 3 is fitted into the inner sleeve 6 from thereabove, and is positioned with the step provided in the intermediate portion of the latter. As a result, a clearance which will be explained later is formed between the lower end face of the first coating die 3 and the upper end face of the second coating die 4. Finally, the inner sleeve 6 is inserted into an outer sleeve, and an unshown lid is attached thereon, so as to secure each member.

The respective flow paths of the first and second coating resins 11, 15 will now be explained. The first coating resin 11 is supplied from the first coating resin inlet port 6a to the first die hole 3a of the first coating resin die 3 by way of the resin introduction hole 3b. On the other hand, the second coating resin 15 is supplied under pressure from the second coating resin inlet port 6b to the reservoir 12 of the second coating die 4. The second coating resin within the second reservoir 12 further travels through the draw portion 13 and then radially flows through the second passage 10 from its outer periphery toward the center, thereby reaching a portion between the outlet of the first die hole 3a and the inlet of the second die hole 4a. In this embodiment, since a single optical fiber coating apparatus is constituted by combination of individual constituent members, processing of each constituent member for forming the flow paths of the first and second resins 11, 15 can be made easier.

Also in this apparatus, the protrusion 5 is effective in regulating the flow of second coating resin, thus being able to suppress the disorder of flows at the interface between the first and second coating resins, thereby making it possible to obtain a double-coated optical fiber with no outside diameter fluctuation even in a higher linear velocity region.

**Industrial Applicability**

The present invention is suitably applied to effectively manufacture the double coated optical fiber.

**Claims**

**1.** An optical fiber coating method comprising the steps of:

applying a first coating resin to the outer periphery of an optical fiber by injecting a first coating resin into a clearance between a first die hole and said optical fiber, while inserting said optical fiber through said first die hole provided in a first coating die and having an inside diameter greater than an outside diameter of said optical fiber; and

applying a second coating resin onto said first coating resin by injecting a second coating resin into a clearance between a second die hole and the surface of said first coating resin applied to said optical fiber, while inserting said optical fiber through said second die hole provided in said second coating die and having an inside diameter greater than that of said first die hole,

wherein: a disk-shaped upper end face of said second coating die and a lower end face of said first coating die are opposed to each other so as to arrange said first and second die holes concentrically, and said second coating resin is injected into said second die hole by way of a gap formed between the lower end face of said first coating die and the upper end face of said second coating die;

**characterized in that** the lower end face of said first coating die is basically disk shaped and has a protrusion formed around said first die hole and projecting in the passing direction of said optical fiber so as to reduce an annular lower-pressure region formed around said optical fiber in a flow of said second coating resin within said gap.

**2.** An optical fiber coating apparatus for applying first and second coating resins as a laminate to the outer periphery of an optical fiber, said apparatus comprising of:

a first coating die having a first die hole through which said optical fiber is inserted and a second coating die having a second die hole which is concentric with said first die hole and through which said optical fiber passed through said first die hole is inserted; wherein said first coating die has a lower end face, and wherein said first die hole and the outer periphery of said optical fiber therein forming a space therebetween into which said first coating resin is injected; and

said second coating die has an upper end face comprising a circular plate opposing the lower end face of said first coating die so as to form a gap through which said second coating resin is injected into a space formed between said second die hole and the outer periphery of said optical fiber therein;

**characterized in that** the lower end face of the first coating die is basically disk shaped and has a protrusion projecting in the passing direction of said optical fiber formed around said first die hole.

3. An optical fiber coating apparatus according to claim 2, wherein said protrusion is shaped like a circular truncated cone.

4. An optical fiber coating apparatus according to claim 3, wherein said apparatus satisfies:

$$0.05 \ G \ < \ H \ < \ 0.5 \ G$$

$$(D_2 - D_1)/2 \ < \ W \ < \ G$$

$$0.01 \ mm \ \leq \ L \ < \ W$$

where H is the height of the circular truncated cone of said protrusion, W is the distance between the outer periphery of the bottom portion of said circular truncated cone and the inner peripheral face of said first die hole, L is the distance between the outer periphery of the head portion of said circular truncated cone and the inner peripheral face of said first die hole, $D_1$ is the inner peripheral face diameter of said first die hole on the outlet side of said optical fiber, $D_2$ is the inner peripheral face diameter of said second die hole on the inlet side of said optical fiber, and G is the distance of the clearance formed between said first and second coating dies.

5. An optical fiber coating apparatus according to claim 3, wherein said apparatus satisfies:

$$0.05 \ mm \ < \ H \ < \ 0.25 \ mm$$

$$0.10 \ mm \ < \ W \ < \ 0.30 \ mm$$

$$0.05 \ mm \ \leq \ L \ < \ 0.1 \ mm$$

$$0.8 \ mm \ \leq \ G \ \leq \ 1.2 \ mm$$

where H is the height of the circular truncated cone of said protrusion, W is the distance between the outer periphery of the bottom portion of said circular truncated cone and the inner peripheral face of said first die hole, L is the distance between the outer periphery of the head portion of said circular truncated cone and the inner peripheral face of said first die hole, and G is the distance of the clearance formed between said first and second coating dies.

**Patentansprüche**

1. Glasfaserbeschichtungsverfahren, umfassend die Schritte:

Anbringen einer ersten Harzschicht an dem äußeren Umfang einer Glasfaser durch Einspritzen einer ersten Harzschicht in einen Freiraum zwischen einem ersten Düsenloch und der Glasfaser, während die Glasfaser durch das erste Düsenloch, das in einer ersten Beschichtungsdüse vorgesehen ist und einen Innendurchmesser aufweist, der größer ist als ein Außendurchmesser der Glasfaser, eingebracht wird, und
Anbringen einer zweiten Harzschicht auf der ersten Harzschicht durch Einspritzen einer zweiten Harzschicht in einen Freiraum zwischen einem zweiten Düsenloch und der Oberfläche der ersten Harzschicht, die an die Glasfaser angebracht wurde, während die Glasfaser durch das zweite Düsenloch, das in der zweiten Beschichtungsdüse vorgesehen ist und einen Innendurchmesser aufweist, der größer ist als der des ersten Düsenlochs, eingebracht wird,

wobei eine scheibenförmige obere Endfläche der zweiten Beschichtungsdüse und eine untere Endfläche der ersten Beschichtungsdüse einander gegenüberliegen, um das erste und zweite Düsenloch konzentrisch anzuordnen, und wobei das zweite Beschichtungsharz in das zweite Düsenloch mittels eines Spaltes, der zwischen der unteren Endfläche der ersten Beschichtungsdüse und der oberen Endfläche der zweiten Beschichtungsdüse gebildet ist, eingespritzt wird,

**dadurch gekennzeichnet, dass** die untere Endfläche der ersten Beschichtungsdüse im Wesentlichen scheibenförmig ist und einen Vorsprung aufweist, der um das erste Düsenloch gebildet ist und sich in der Durchlaufrichtung der Glasfaser erstreckt, um einen ringförmigen Niedrigdruckbereich, der um die Glasfaser in einem Fluss der zweiten Harzschicht innerhalb des Spaltes gebildet ist, zu reduzieren.

2. Glasfaserbeschichtungsvorrichtung zum Anbringen von ersten und zweiten Harzschichten als ein Laminat an den äußeren Umfang einer Glasfaser, wobei die Vorrichtung, umfasst:

eine erste Beschichtungsdüse mit einem ersten Düsenloch durch welches die Glasfaser eingebracht wird und eine zweite Beschichtungsdüse mit einem zweiten Düsenloch, das konzentrisch zu dem ersten Düsenloch ist und durch welches die Glasfaser, die durch das erste Düsenloch hindurchpassiert ist, eingebracht wird; wobei die erste Beschichtungsdüse eine untere Endfläche aufweist und wobei das erste Düsenloch und der äußere Umfang der Glasfaser darin einen Raum ausbilden, in welchen die erste Harzschicht eingespritzt wird, und wobei die zweite Beschichtungsdüse eine obere Endfläche mit einer kreisförmigen Platte gegenüber der unteren Endfläche der ersten Beschichtungsdüse umfasst, um einen Spalt auszubilden, durch welchen das zweite Beschichtungsharz in einen Raum, der zwischen dem zweiten Düsenloch und dem äußeren Umfang der Glasfaser darin ausgebildet wird, eingespritzt wird,

**dadurch gekennzeichnet, dass** die untere Endfläche der ersten Beschichtungsdüse im Wesentlichen scheibenförmig ist und einen Vorsprung aufweist, der sich in der Durchlaufrichtung der Glasfaser erstreckt, die um das erste Düsenloch ausgebildet ist.

3. Glasfaserbeschichtungsvorrichtung nach Anspruch 2, bei der der Vorsprung wie ein kreisförmiger Kegelstumpf geformt ist.

4. Glasfaserbeschichtungsvorrichtung nach Anspruch 3, bei der die Vorrichtung folgendes erfüllt:

$$0{,}05 \ G \ < \ H \ < \ 0{,}5 \ G$$

$$(D_2 - D_1)/2 \ < \ W \ < \ G$$

$$0{,}01 \ mm \ \leq \ L \ < \ W$$

wobei H die Höhe des kreisförmigen Kegelstumpfes des Vorsprungs darstellt, W der Abstand zwischen dem äußeren Umfang des Bodenabschnittes des kreisförmigen Kegelstumpfes und der inneren Umfangsfläche des ersten Düsenlochs ist, L der Abstand zwischen dem äußeren Umfang des Kopfabschnittes des kreisförmigen Kegelstumpfes und der inneren Umfangsfläche des ersten Düsenloches ist, $D_1$ der innere Umfangsflächendurchmesser des ersten Düsenloches auf der Auslassseite der Glasfaser ist, $D_2$ der innere Umfangsflächendurchmesser des zweiten Düsenloches auf der Einlassseite der Glasfaser ist und G den Abstand des Freiraumes, der zwischen den ersten und zweiten Beschichtungsdüsen gebildet ist, darstellt.

5. Glasfaserbeschichtungsvorrichtung nach Anspruch 3, bei der die Vorrichtung folgendes erfüllt:

$$0{,}05 \ mm \ < \ H \ < \ 0{,}25 \ mm$$

$$0,10 \text{ mm} < W < 0,30 \text{ mm}$$

$$0,05 \text{ mm} \leq L < 0,1 \text{ mm}$$

$$0,8 \text{ mm} \leq G \leq 1,2 \text{ mm}$$

wobei H die Höhe des kreisförmigen Kegelstumpfes des Vorsprungs darstellt, W der Abstand zwischen dem äußeren Umfang des Bodenabschnittes des kreisförmigen Kegelstumpfes und der inneren Umfangsfläche des ersten Düsenloches ist, L der Abstand zwischen dem äußeren Umfang des Kopfabschnittes des kreisförmigen Kegelstumpfes und der inneren Umfangsfläche des ersten Düsenloches ist und G den Abstand des Freiraumes, der zwischen den ersten und zweiten Beschichtungsdüsen gebildet ist, darstellt.

**Revendications**

1. Procédé d'enduction de fibre optique comprenant les étapes consistant à :

   appliquer une première résine d'enduction à la périphérie extérieure d'une fibre optique en injectant une première résine d'enduction dans un espace entre un trou de première filière et ladite fibre optique, tout en insérant ladite fibre optique à travers ledit trou de première filière prévu dans une première filière d'enduction et ayant un diamètre intérieur plus grand qu'un diamètre extérieur de ladite fibre optique ; et
   appliquer une deuxième résine d'enduction sur ladite première résine d'enduction en injectant une deuxième résine d'enduction dans un espace entre un trou de deuxième filière et la surface de ladite première résine d'enduction appliquée à ladite fibre optique, tout en insérant ladite fibre optique à travers ledit trou de deuxième filière prévu dans ladite deuxième filière d'enduction et ayant un diamètre intérieur plus grand que celui dudit trou de première filière,
   dans lequel : une face d'extrémité supérieure en forme de disque de ladite deuxième filière d'enduction et une face d'extrémité inférieure de ladite première filière d'enduction sont opposées l'une à l'autre de manière à agencer lesdits trous de première et deuxième filières concentriquement, et ladite deuxième résine d'enduction est injectée dans ledit trou de deuxième filière au moyen d'un espace formé entre la face d'extrémité inférieure de ladite première filière d'enduction et la face d'extrémité supérieure de ladite deuxième filière d'enduction ;
   **caractérisé en ce que** la face d'extrémité inférieure de ladite première filière d'enduction a essentiellement la forme d'un disque et comporte une protubérance formée autour dudit
   trou de première filière et faisant saillie dans la direction de passage de ladite fibre optique de manière à réduire une région de plus faible pression annulaire formée autour de ladite fibre optique dans un écoulement de ladite deuxième résine d'enduction dans ledit espace.

2. Dispositif d'enduction de fibre optique pour appliquer des première et deuxième résines d'enduction en tant que stratifié à la périphérie extérieure d'une fibre optique, ledit dispositif comprenant :

   une première filière d'enduction comportant un trou de première filière à travers lequel ladite fibre optique est insérée et une deuxième filière d'enduction comportant un trou de deuxième filière qui est concentrique avec ledit trou de première filière et à travers lequel ladite fibre optique qui est passée à travers ledit trou de première filière est insérée ; dans lequel ladite première filière d'enduction comporte une face d'extrémité inférieure, et dans lequel ledit trou de première filière et la périphérie extérieure de ladite fibre optique dans celui-ci forment un espace entre eux dans lequel ladite première résine d'enduction est injectée ; et
   ladite deuxième filière d'enduction comporte une face d'extrémité supérieure comprenant une plaque circulaire faisant face à la face d'extrémité inférieure de ladite première filière d'enduction de manière à former un espace à travers lequel ladite deuxième résine d'enduction est injectée dans un espace formé entre ledit trou de deuxième filière et la périphérie extérieure de ladite fibre optique dans celui-ci ;
   **caractérisé en ce que** la face d'extrémité inférieure de la première filière d'enduction a essentiellement la forme d'un disque et comporte une protubérance faisant saillie dans
   la direction de passage de ladite fibre optique formée autour dudit trou de première filière.

**3.** Dispositif d'enduction de fibre optique selon la revendication 2, dans lequel ladite protubérance a la forme d'un cône tronqué circulaire.

**4.** Dispositif d'enduction de fibre optique selon la revendication 3, dans lequel ledit dispositif satisfait à :

$$0,05 \ G \ < \ H \ < \ 0,5 \ G$$

$$(D_2 \ - \ D_1)/2 \ < \ W \ < \ G$$

$$0,01 \ mm \ \leq \ L \ < \ W$$

où H est la hauteur du cône tronqué circulaire de ladite protubérance, W est la distance entre la périphérie extérieure de la partie inférieure dudit cône tronqué circulaire et la face périphérique intérieure dudit trou de première filière, L est la distance entre la périphérie extérieure de la partie de tête dudit cône tronqué circulaire et la face périphérique intérieure dudit trou de première filière, $D_1$ est le diamètre de la face périphérique intérieure dudit trou de première filière du côté de sortie de ladite fibre optique, $D_2$ est le diamètre de la face périphérique intérieure dudit trou de deuxième filière du côté d'entrée de ladite fibre optique et G est la distance de l'espace formé entre lesdites première et deuxième filières d'enduction.

**5.** Dispositif d'enduction de fibre optique selon la revendication 3, dans lequel ledit dispositif satisfait à :

$$0,05 \ mm \ < \ H \ < \ 0,25 \ mm$$

$$0,10 \ mm \ < \ W \ < \ 0,30 \ mm$$

$$0,05 \ mm \ \leq \ L \ < \ 0,1 \ mm$$

$$0,8 \ mm \ \leq \ G \ \leq \ 1,2 \ mm$$

où H est la hauteur du cône tronqué circulaire de ladite protubérance, W est la distance entre la périphérie extérieure de la partie inférieure dudit cône tronqué circulaire et la face périphérique intérieure dudit trou de première filière, L est la distance entre la périphérie extérieure de la partie de tête dudit cône tronqué circulaire et la face périphérique intérieure dudit trou de première filière et G est la distance de l'espace formé entre lesdites première et deuxième filières d'enduction.

**Fig.1**

1  11  3

| | |
|---|---|
| ⊘⊘⊘ | >2.500E+05 |
| ◻ | 2.3667E+05 |
| ◻ | 2.1833E+05 |
| ◻ | 2.000E+05 |
| ⊘⊘⊘ | 1.8167E+05 |
| ◻ | <1.500E+05 |

15

# Fig.2

# Fig.3

| | |
|---|---|
| >2.500E+05 | |
| 2.3667E+05 | |
| 2.1833E+05 | |
| 2.000E+05 | |
| 1.8167E+05 | |
| <1.500E+05 | |

# Fig.4

EP 1 043 283 B1

**Fig.5A**

**Fig.5B**

**Fig.5C**

**Fig.5D**

# Fig.6

*Fig.7*

*Fig.8*

# Fig.9

# Fig.10

## Fig.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2038437 U
- JP 9086971 B
- US 4801186 A

- JP 09241042 A
- JP 09255372 A